# EUROPEAN PATENT SPECIFICATION

(11) **EP 0 960 657 B1**
(45) Date of publication and mention of the grant of the patent: **06.03.2002**
(21) Application number: 99201471.2
(22) Date of filing: 12.05.1999
(51) Int. Cl.: B05C 11/08, B05C 11/10, G11B 7/26, B04C 5/08, B04C 7/00

(54) **A device which is suitable for applying a lacquer film to a disc-shaped registration carrier, as well as a method to be used therewith**
Vorrichtung und Verfahren zum Auftrag eines Lackfilms auf einem scheibenförmigen Aufzeichnungsträger
Dispositif et procédé d'application d'un film de laque sur un support d' enregistrement en forme de disque

(30) Priority: 29.05.1998 NL 1009281
(43) Date of publication of application: 01.12.1999
(73) Proprietor: OTB Group B.V., 5652 AM Eindhoven (NL)
(72) Inventor: van der Blij, Fredrik Wilhelm, 5654 AK Eindhoven (NL); van der Horst, Gijsbertus Nicolaas Maria, 5541 VK Eersel (NL)
(74) Representative: Prins, Adrianus Willem

(56) References cited:
- US-A- 5 672 205
- PATENT ABSTRACTS OF JAPAN vol. 098, no. 005, 30 April 1998 (1998-04-30) & JP 10 004050 A (DAINIPPON SCREEN MFG CO LTD), 6 January 1998 (1998-01-06)
- PATENT ABSTRACTS OF JAPAN vol. 016, no. 118 (C-0922), 25 March 1992 (1992-03-25) & JP 03 288569 A (TOKYO ELECTRON LTD;OTHERS: 01), 18 December 1991 (1991-12-18)
- PATENT ABSTRACTS OF JAPAN vol. 097, no. 010, 31 October 1997 (1997-10-31) & JP 09 150101 A (DAINIPPON SCREEN MFG CO LTD), 10 June 1997 (1997-06-10)

## Description

The invention relates to a device for collecting excess atomized lacquer from an apparatus for applying a lacquer film to a disc-shaped registration carrier comprising at least one exhaust pipe in which an air stream containing excess atomized lacquer is withdrawn from an area adjacent to the registration carrier and sent to an interior of a cyclone, the cyclone comprising a container with a bottom, top and an interconnecting side wall that collectively define the interior therein, wherein the container is provided with an exhaust pipe in which the air stream containing excess atomized lacquer flows to direct the air stream into a circular flow pattern within the interior of the container, whereby the lacquer is collected and withdrawn from within the interior of the cyclone through a lacquer discharge channel.

The invention furthermore relates to a method for applying a lacquer film to a disc-shaped registration carrier, wherein atomized lacquer constituents are exhausted during the application of the liquid lacquer to the disc-shaped registration carrier.

U.S. 5,672,205 relates to a coating apparatus wherein in the resist application the resist solution portions scattered around from the wafer are collected in the cup, and sent as a waste solution from the drain opening at the bottom of the cup through the drain pipe to the tank. At the same time the air present in the cup is also discharged as a waste gas from the drain opening together with the waste solution. This means that the waste solution and the air are sent together from the cup to the tank in which the separation of the waste solution and the air (liquid-gas separation) is carried out.

JP-10 004 050-A relates to a substrate processing apparatus wherein below a cup a stage is disposed with a mist separator inserted between said stage and an exhaust hole of the cup.

JP-03 288 569-A relates to a treatment apparatus for controlling exhaust by providing a filter trapping the powder solidified and generated by a mist trap between the mist trap provided on the upstream side of an exhaust flow path of a gas-liquid mixture.

JP 09 150 101-A relates to a substrate treating device wherein a resist is supplied to the surface of the substrate from a nozzle. A cup is arranged in proximity to this substrate so as to enclose its circumference wherein a mist capturing plate is disposed in the cup in the position where the mists collide against the spiral air flow, said mist capturing plate captures and recovers the mists within the cup.

With a device known from EP-0 594 252 for applying a lacquer film to a disc-shaped registration carrier, such as CDs or CD recordables, a liquid lacquer is applied to the disc-shaped registration carrier whilst the disc-shaped registration carrier is being rotated. By rotating the disc-shaped registration carrier, the liquid lacquer being applied is spread uniformly over the surface of the disc-shaped registration carrier. In order to apply the thin lacquer film relatively quickly, the disc-shaped registration carrier is rotated at a relatively high rotational speed.

As a result of the high rotational speed during the so-called spinning out of the lacquer film, air swirls are formed near the outer edge or near the circumference of the disc-shaped registration carrier. In combination with the spinning off of excess liquid lacquer from the disc-shaped registration carrier, this leads to the formation of a mist of small liquid particles. This mist is carried off by for example a downward air flow. So far the mist has been discharged into the environment together with the exhausted air, which is undesirable, however. In the first place, the fan or pump carrying out the exhaustion operation as well as the pipes are fouled by lacquer particles precipitating from the mist. Moreover, the emission of air containing lacquer particles is unacceptable for environmental reasons.

The object of the invention is to provide a device wherein atomized constituents formed during the application of a lacquer film to a disc-shaped registration carrier are discharged in a relatively clean manner. The present invention is not restricted to any particular lacquer, i.e. a lacquer comprising pigments, dyes, a UV hardening lacquer etc. may be used in the present invention.

This objective is accomplished with the device according to the invention in which device the exhaust pipe and the lacquer discharge channel are both located in the lower half of the container.

Since the liquid lacquer particles are caught in said separator, said particles will not end up in the fan, the pump, the piping and the environment.

The use of a cyclone makes it possible in a simple manner to obtain a separation between relatively heavy lacquer particles and the other atomized constituents. Said other atomized constituents substantially comprise air and possibly volatile lacquer constituents.

Another embodiment of the device according to the invention is characterized in that said cyclone is connected to an air pipe from another process station, preferably a station in which a UV lamp is disposed.

Said UV lamp is for example used in another station, where curing of the lacquer film that has been applied to the disc-shaped registration carrier takes place. The UV lamp generates heat, and in order to achieve a reliable operation it is desirable to cool said lamp. Exhaustion from the UV lamp not only provides a cooling effect, but also the ozone being formed is removed thereby. Thus, an efficient air control is realised by a combination of exhausting and subsequently supplying the air to the cyclone.

Another embodiment of the device according to the invention is characterized in that said cyclone is provided with a container, two pipes arranged coaxially therein, wherein a gap is present between the ends of said two pipes, whilst a channel opens into a space present between said container and a pipe, whilst on the side remote from said container said channel opens near the circumference of a registration carrier to be provided with a lacquer film.

Additional air is supplied via a first pipe, which air is discharged, together with the other atomized constituents, via the second pipe. As a result of the supply of air from the first pipe, a relatively good swirling air flow is formed in the cyclone. Preferably, air from another process station, preferably a station in which a UV lamp is disposed as-described before, is supplied through said first pipe.

The invention will now be explained in more detail with reference to a drawing, wherein:
Figure 1 is a cross-sectional view of a device for applying a lacquer film;
Figure 2 is a cross-sectional view of a separator comprising a cyclone according to the invention; and
Figure 3 is a cross-sectional view,. in the direction indicated by III-III, of the separator of Figure 2.

Corresponding parts are indicated by the same numerals in the figures.

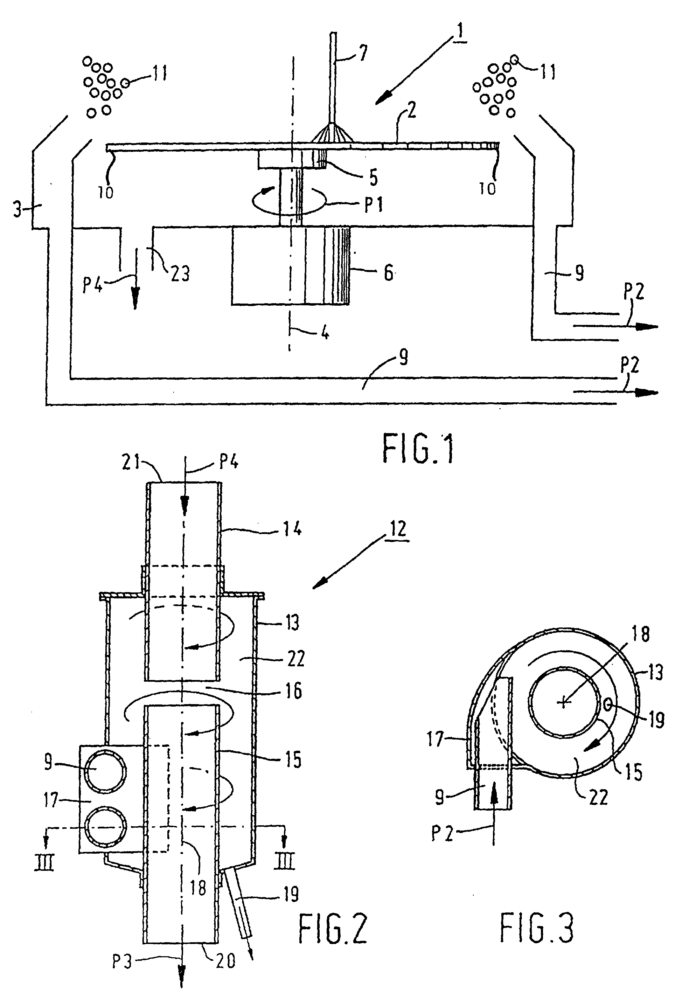

Figure 1 shows a device 1 for applying a lacquer film to a disc-shaped registration carrier 2, which device 1 is provided with a cup-shaped container 3, in which a support 5 which is rotatable about a central axis 4 is disposed. Support 5 is driven in the direction indicated by arrow P1 by means of a motor 6. A lacquer supply channel 7 discharges into cup-shaped container 3, via which channel lacquer is applied to disc-shaped registration carrier 2. Cup-shaped container 3 is furthermore provided with one or more discharge pipes 23 for discharging excess lacquer in the direction indicated by arrow P4, and with a number of exhaust pipes 9 for exhausting atomized lacquer constituents. Said exhaust pipes 9 are preferably disposed at the position where air swirls form a mist 11 of small liquid particles, namely at the outer edge or near the circumference of the disc-shaped registration carrier 2. In a special embodiment of the device according to the present invention it is preferred to arrange exhaust pipe 9 round the entire circumference of disc-shaped registration carrier 2. Thus an annular exhaust pipe 9 is obtained, which is disposed near the outer edge 10. It is also possible, however, to arrange a number of exhaust pipes 9 in regularly spaced-apart relationship along outer edge 10.

Before discussing the separator comprising a cyclone according to the present invention, the operation of device 1, which is known per se, will first be discussed in more detail.

Support 5 and the disc-shaped registration carrier 2 present thereon are rotated at a relatively high speed of rotation in the direction indicated by arrow P1 by means of motor 6. Lacquer is applied to the disc-shaped registration carrier 2 from lacquer supply channel 7, near the centre of disc-shaped registration carrier 2, whereby the rotation of the disc-shaped registration carrier 2 will cause the lacquer to spread. Excess lacquer falls into cup-shaped container 3 near the outer edge 10 of disc-shaped registration carrier 2, and is discharged via one or more discharge pipes 23. As a result of said rotation, air swirls are formed near the outer edge 10 of disc-shaped registration carrier 2, which air swirls, together with the excess liquid lacquer, form a mist 11 of air and small liquid lacquer particles. Said mist 11 is exhausted through exhaust pipe 9 in the directions indicated by arrows P2.

Figure 2 shows a separator comprising a cyclone 12 according to the invention, which is provided with a cylindrical container 13 and two pipes 14, 15 coaxially disposed therein. A gap 16 is present between the facing ends of pipes 14, 15. Container 13 is furthermore provided with an inlet 17, into which exhaust pipes 9 discharge. Pipes 9 preferably extend tangentially to the central axis 18 of container 13. Container 13 is furthermore provided with a lacquer discharge channel 19 near its bottom side. One end 20 of pipe 15 remote from pipe 14 is connected to a fan or pump (not shown) for drawing air through cyclone 12. One end 21 of pipe 14 remote from pipe 15 is connected to an air supply channel, which is for example connected to an air pipe which is used for cooling a UV lamp which is disposed nearby.

The operation of cyclone 12 is as follows. Air is drawn from pipe 15, via end 20, by means of the fan, as a result of which air is drawn in from pipes 9 and 14. The air which is present in pipe 9, which air contains the atomized lacquer constituents, is introduced tangentially into the space 22 between container 13 and pipe 15 and will start to circulate in said space (refer in particular to Figure 3). Said pipe 14 preferably projects a small distance into container 13. When such a construction is used, a substantially undisturbed circulating air flow of the atomized constituents is generated between container 13 and pipes 14, 15, as a result of which no lacquer particles will be discharged in the direction indicated by arrow P3 via pipe 15. The relatively heavy lacquer particles are thereby moved towards the wall of container 13 and will slide along the wall of container 13 in the direction of lacquer discharge channel 19. The other atomized constituents, viz. the mist 11 from which the relatively heavy lacquer particles have been removed, are drawn in the direction of gap 16. The relatively lighter lacquer particles are carried along with the air flow to the top of container 13. As a result of the circulating air flow in container 13, the relatively lighter lacquer particles will agglomerate after some time, thus forming heavier lacquer particles, which are then moved to the wall of container 13, from where they will slide into lacquer discharge channel 19. Subsequently, the substantially clean air is carried off in the direction indicated by arrow P3 via pipe 15. The air being supplied in the direction indicated by arrow P4 via pipe 14 may have been utilized already, for example for cooling a UV lamp disposed in a station where curing of the lacquer applied to the registration carrier takes place. In this manner it is possible, using a single fan or pump, to create an air flow which can be utilized for cooling the UV lamp, for exhausting atomized constituents as well as for separating lacquer particles from the atomized constituents. The magnitude of the air flow and the degree of circulation of the atomized constituents can be influenced by changing the dimension of gap 16.

## Claims

1. A device for collecting excess atomized lacquer from an apparatus (1) for applying a lacquer film to a disc-shaped registration carrier (2) comprising at least one exhaust pipe (9) in which an air stream containing excess atomized lacquer is withdrawn from an area adjacent to the registration carrier (2) and sent to an interior of a cyclone (12), the cyclone (12) comprising a container (13) with a bottom, top and an interconnecting side wall that collectively define the interior therein, wherein the container (13) is provided with an exhaust pipe (9) in which the air stream containing excess atomized lacquer flows to direct the air stream into a circular flow pattern within the interior of the container (13), whereby the lacquer is collected and withdrawn from within the interior of the cyclone (12) through a lacquer discharge channel (19), **characterized in that** the exhaust pipe (9) and the lacquer discharge channel (19) are both located in the lower half of the container (13).

2. A device according to claim 1, **characterized in that** said cyclone (12) is provided with a pipe (14) for supplying air to the container (13).

3. A device according to claims 1 - 2, **characterized in that** said cyclone (12) comprises a first pipe (14) and a second pipe (15) arranged coaxially within the container (13), wherein the first pipe (14) supplies air to the cyclone (12), wherein a gap (16) is present between the opposing ends of said two pipes (14,15), wherein the second pipe (15) draws air through the cyclone (12).

4. A device according to claims 2 and 3, **characterized in that** the second pipe (15) is connected to a pump, whilst the first pipe (14) comprises the pipe for supplying air.

5. A device according to claims 2 - 4, **characterized in that** the first pipe (14) for supplying air originates at a station in which a UV lamp is disposed.

6. A device according to claim 3, **characterized in that** the gap (16) present between the ends of the two pipes (14,15) is positioned substantially in the centre of said container (13).

7. A method for collecting excess atomized lacquer from an apparatus (1) for applying a lacquer film to a disc-shaped registration carrier (2) comprising:
withdrawing air containing excess atomized lacquer from an area adjacent to the registration carrier (2) through at least one conduit (9);
transporting the withdrawn air containing excess atomized lacquer into an interior of a cyclone (12) having a container (13) with a bottom, top and interconnecting side wall that collectively define the interior therein, where the exhaust pipe (9) and the lacquer discharge channel (19) are both located in the lower half of the container (13);
directing the withdrawn air containing excess atomized lacquer into a circular flow pattern;
collecting a first a volume of heavier particles at the side wall and a second volume of lighter particles near the top; and
discharging the collected volumes in the lower half of the cyclone (12).

8. A method according to claim 7, **characterized in that** air from a station in which a UV lamp is disposed is drawn through said cyclone (12), which air absorbs said atomized constituents.

## Patentansprüche

1. Vorrichtung zum Sammeln überschüssigen vernebelten Lacks aus einer Vorrichtung (1) zum Aufbringen eines Lackfilms aufeinen scheibenförmigen Aufzeichnungsträger (2), mit wenigstens einem Auslaßrohr (9), in dem ein überschüssigen vernebelten Lack enthaltender Luftstrom aus einem Bereich nahe dem Aufzeichnungsträger (2) abgesogen und in das Innere eines Zyklons (12) geleitet wird, wobei der Zyklon (12) einen Behälter (13) mit einem Boden, einer Oberseite und einer diese verbindende Seitenwand aufweist, welche zusammen den Innenraum begrenzen, wobei der Behälter (13) mit einem Auslaßrohr (9) versehen ist, In dem der überschüssigen vernebelten Lack enthaltende Luftstrom strömt, um den Luftstrom in ein kreisförmiges Strömungsmuster im Inneren des Behälters (13) zu leiten, wodurch der Lack gesammelt und aus dem Inneren des Zyklons (12) durch einen Lackauslaßkanal (10) ausgelassen wird, **dadurch gekennzeichnet, daß** das Ausiaßrohr (9) und der Lackauslaßkanal (19) in der unteren Hälfte des Behälters (13) angeordnet sind.

2. Vorrichtung nach Anspruch 1, **dadurch gekennzeichnet, daß** der Zyklon (12) mit einem Rohr (14) zum Zuführen von Luft zum Behälter (13) versehen ist.

3. Vorrichtung nach den Ansprüchen 1-2, **dadurch gekennzeichnet, daß** der Zyklon (12) ein erstes Rohr (14) und ein zweites Rohr (15) aufweist, die koaxial in dem Behälter (13) angeordnet sind, wobei das erste Rohr (14) dem Zyklon (12) Luft zuführt, wobei ein Spalt (16) zwischen den gegenüberliegenden Enden der beiden Rohre (14, 15) vorhanden ist, und wobei das zweite Rohr (15) Luft durch den Zyklon (12) ansaugt.

4. Vorrichtung nach den Ansprüchen 2 und 3, **dadurch gekennzeichnet, daß** das zweite Rohr (15) mit einer Pumpe verbunden ist, während das erste Rohr (14) das Luftzuführrohr aufweist.

5. Vorrichtung nach den Ansprüchen 2-4, **dadurch gekennzeichnet, daß** das erste Rohr (14) zum Zuführen von Luft an einer Station beginnt, in der eine UV-Lampe angeordnet ist.

6. Vorrichtung nach Anspruch 3, **dadurch gekennzeichnet, daß** der Spalt (16) zwischen den Enden der beiden Rohre (14, 15) im wesentlichen in der Mitte des Behälters (13) angeordnet ist.

7. Verfahren zum Sammeln überschüssigen vernebelten Lacks aus einer Vorrichtung (1) zum Aufbringen eines Lackfilms auf einen scheibenförmigen Aufzeichnungsträger (2), mit den folgenden Schritten:
- Absaugen von überschüssigen vernebelten Lack enthaltender Luft aus einem Bereich nahe dem Aufzeichnungsträger (2) durch wenigstens eine Leitung (9);
- Transportieren der abgesaugten überschüssigen vernebelten Lack enthaltenden Luft in das Innere eines Zyklons (12) mit einem Behälter (13) mit einem Boden, einer Oberseite und einer diese verbindende Seitenwand, welche zusammen den Innenraum begrenzen, wobei das Auslaßrohr (9) und der Lackauslaßkanal (19) in der unteren Hälfte des Behälters (13) angeordnet sind;
- Leiten der abgesaugten überschüssigen vernebelten Lack enthaltenden Luft in ein kreisförmiges Strömungsmuster;
- Sammeln einer ersten Menge schwererer Partikel an der Seitenwand und einer zweiten Menge leichterer Partikel nahe der Oberseite; und
- Auslassen der gesammelten Mengen in der unteren Hälfte des Zyklons (12).

8. Verfahren nach Anspruch 7, **dadurch gekennzeichnet, daß** Luft aus einer Station, in der eine UV-Lampe angeordnet ist, durch den Zyklon (12) gesaugt wird, wobei die Luft die vernebelten Bestandteile absorbiert.

## Revendications

1. Dispositif pour collecter un excès de laque atomisée, délivrée par un dispositif (1) servant à appliquer un film de laque sur un support d'enregistrement en forme de disque (2), comprenant au moins une canalisation d'évacuation (9), dans laquelle un courant d'air contenant l'excès de laque atomisée est entrainé à partir d'une zone adjacente au support d'enregistrement (2) et est envoyé à l'intérieur d'un cyclone (12), le cyclone (12) comprenant un récipient (13) pourvu d'un fond, d'une partie supérieure et d'une paroi latérale de liaison, qui définissent collectivement l'intérieur de ce récipient, et dans lequel le récipient (13) comporte une canalisation d'évacuation (9), dans laquelle le courant d'air contenant l'excès de laque atomisée circule de manière à diriger le courant d'air selon une configuration d'écoulement circulaire à l'intérieur du récipient (13), laquelle étant collectée et entraînée depuis l'intérieur du cyclone (12) par un conduit (19) d'évacuation de la laque, **caracterisé en ce que** la canalisation d'évacuation (9) et le conduit (19) d'évacuation de la laque sont tous deux situés, dans la moitié inférieure du récipient (13).

2. Dispositif selon la revendication 1, **caractérisé en ce que** ledit cyclone (12) comporte une canalisation (14) servant à envoyer de l'air au récipient (13).

3. Dispositif selon les revendications 1-2, **caractérisé en ce que** ledit cyclone (12) comprend une première canalisation (14) et une seconde canalisation (16) disposées coaxialement à l'intérieur du récipient (13), et dans lequel la première canalisation (14) envoie de l'air au cyclone (12), un interstice (16) étant présent entre les extremités opposées desdites deux canalisations (14, 15), la seconde canalisation (15) entraînant de l'air à travers le cyclone (12).

4. Dispositif selon les revendications 2 et 3, calactérisé en ce que la seconde canalisation (15) est connectée à une pompe, tandis que la première canalisation (14) comprend la canalisation pour l'amenée d'air.

5. Dispositif selon l'une des revendications 2-4, **caractérisé en ce que** la première canalisation (14) pour l'envoi d'air part d'un poste, dans lequel est disposé une lampe à ultraviolets.

6. Dispositif selon la revendication 3, **caractérisé en ce que** l'interstice (16) présent entre les extrémités des deux canalisations (14, 15) est dispose sensiblement au centre dudit récipient (13).

7. Procédé pour collecter l'excès de laque atomisée à partir d'un dispositif (1) pour appliquer un film de laque à un support d'enregistrement en forme de disque (2), comprenant les étapes consistant à:
entrainer de l'air contenant un excès de laque atomisée à partir d'une zone située au voisinage du support d'enregistrement (2), par l'intermédiaire d'au moins une canalisation (9) ;
transporter l'air entraîné contenant un excés de laque atomisée, pour l'amener dans un cyclone (12) comportant un récipient (13) pourvu d'un fond, d'une partie supérieure et d'une paroi latérale de liaison, qui définissent collectivement l'intérieur du récipient, ou la canalisation d'évacuation (9) et le conduit (19) d'évacuation de la laque sont tous deux situés dans la moitié inférieure du récipient (13);
diriger l'air entrainé contenant l'excès de laque atomisée selon une configuration d'écoulement circulaire;
collecter un premier volume de particules plus lourdes au niveau de la paroi latérale et un second volume de particules plus légère à proximité de la partie supérieure; et
décharger les volumes collectés dans la moitié inférieure du cyclone (12).

8. Procédé selon la revendication 7, **caractérisé en ce que** de l'air provenant d'un poste dans lequel une lampe à ultraviolets est disposée est entrainé à travers ledit cyclone (12), lequel air absorbe lesdits constituants atomisé.
